# EUROPEAN PATENT APPLICATION

(11) **EP 1 091 527 A2**
(43) Date of publication of application: **11.04.2001**
(21) Application number: 00308267.4
(22) Date of filing: 21.09.2000
(51) Int. Cl.: H04L 12/56

(54) **Method and apparatus for controlling bandwidth sharing in a data transport network**

(30) Priority: 21.09.1999 US 400288
(71) Applicant: Nortel Networks Limited, Montreal, Quebec H2Y 3Y4 (CA)
(72) Inventor: Chapman, Alan S., Kanata, Ontario K2K 1V5 (CA); Kung, Hsiang T., Lexington, Massachusetts 02173 (US)
(74) Representative: Kay, Ross Marcel

(57) **Abstract**

A method and apparatus for regulating a rate of release of data from a node (104) in a data network (100). The node (104) includes an output for releasing data towards a remote node in the network and a control unit. The control unit is responsible for implementing at least two independent bandwidth control mechanisms to selectively control the usage of available bandwidth at the node, such that a fair or deliberately unfair sharing of the available bandwidth within the network can be ensured.

## Description

The present invention relates to the field of digital data transmission. More specifically, it pertains to a method and apparatus for controlling bandwidth sharing within a data transport network, such as a standard routed network or an add/drop packet network.

Within a data transport network, it is desirable that bandwidth sharing between the network connections be well managed so as to avoid congestion. In the simplest form, this means that connections sharing a section of the physical transport medium should all be able to get a reasonable share of the bandwidth at that point.

The Transmission Control Protocol (TCP), widely used for IP network transactions, provides for both reliable transmission and rate adaptation in order to adjust to available network bandwidth. The protocol is self-clocking in that new packets are sent in response to acknowledgments of previously sent packets. Acknowledgements are received after a complete round trip time from the sender to the receiver and back to the sender. To allow the connection to achieve the maximum rate the sender will transmit some number of packets, called the window, while waiting for the acknowledgments of previous packets. The window size is slowly but steadily increased as the sender probes to find out how fast a rate the network can support. The absence of an acknowledgment is assumed to mean the loss of a packet at which time the sender will retransmit the lost packet and decrease its sending rate by reducing the size of the window. It then begins a slow increase in window size until packet loss is encountered again.

Where there are multiple connections which compete at a congestion point such as a router buffer, the connections will settle into a fairly steady cycle of multiplicative decrease and additive increase in window size which gives every connection a share of the bandwidth. Unfortunately, the sharing may or may not be fair since it is influenced by the Round Trip Time (RTT) of the connection as well as the Maximum Segment Size (MSS) of the packets used by the connection. Specifically, for a constant packet size, connections with long control loops (round trip times) will not get as much bandwidth as those with shorter control loops. The packet discard mechanism at the router has no knowledge of these factors and therefore has no way to ensure fair sharing. Indeed, certain known buffer management schemes, such as Random Early Detection (RED), tend to make all connections have the same window size and so actually reinforce the unfairness of TCP.

The background information herein clearly shows that there exists a need in the industry to provide an improved mechanism for controlling bandwidth sharing within a data transport network.

The present invention provides a node, for use in a data network, in which a rate of release of data from the node to a remote node in the network can be regulated by at least two bandwidth control mechanisms, namely a primary bandwidth control mechanism and a secondary bandwidth control mechanism. The primary bandwidth control mechanism is operative to selectively alter a rate of release of control packets from the node. A control packet contains control information associated to at least one data packet released from the node. In a first example of implementation the secondary bandwidth control mechanism is operative to selectively alter an amount of data in data packets associated with a control packet. The secondary bandwidth control mechanism provides an additional level of control which is not available when only the primary bandwidth control mechanism is used to regulate bandwidth over a certain trunk.

The data packets carry mostly user payload data, such as speech samples, video samples or other. The control packets carry control information, such as source and destination identifiers, control sequence numbers and reverse direction acknowledgements for the data packets associated to the control packet. For a particular trunk, the control packet emulates the header of a TCP packet and the traffic between control packets (user data packets) represents the payload. Thus, the trunk now has a virtual packet with a length controlled by the sampling rate of the control packets. The control packets can carry sequence numbers, thus removing the need for any inspection of data packets by the trunk receiver.

Under the first example of implementation, the primary bandwidth control mechanism implements a TCP-like control mechanism where an adaptive window, characterized by a window size, determines the number of control packets that can be released from the node before receiving an acknowledgement message from a remote node, the acknowledgement message confirming receipt at the remote node of the earliest control packet in the adaptive window.

The secondary bandwidth control mechanism is operative to selectively alter the amount of data in data packets associated with a control packet. This means that either the number of data packets associated to a control packet can be altered, the amount of data (such as the number of bytes) in a data packet can be altered, or both. In this example of implementation, the secondary bandwidth control mechanism can alter the rate of release of data from the node independently from the primary bandwidth control mechanism. In other words, the primary bandwidth control mechanism can maintain the rate of release of control packets constant while the actual rate of release of data can be changed by virtue of the secondary bandwidth control mechanism that alters the amount of data in data packets associated to a control packet. Referring back to the notion of a virtual packet, this way of controlling the rate of release of data from the node amounts to regulating the payload size of the virtual packet while maintaining the header the same.

In a second example of implementation, the secondary bandwidth control mechanism is operative to alter a round trip time associated with a control packet released from the node. The round trip time corresponds to the amount of time elapsed from the release of a control packet from the node to the receipt at the node of an acknowledgement message from a remote node, the acknowledgement message confirming receipt of the control packet at the remote node. The round trip time includes a first time component corresponding to an actual time of travel of a control packet from the source node to the remote node and an actual time of travel of an acknowledgement message from the remote node to source node, and a second time component corresponding to a delay time element.

Most preferably, the node implements a secondary bandwidth control mechanism operating according to the first example of implementation and also according to the second example of implementation. Accordingly, the secondary bandwidth control mechanism can selectively alter the amount of data in data packets associated with a control packet, the round trip time or both in order to achieve bandwidth control as desired or specified.

The present invention also encompasses a method for controlling the rate of release of data from a node in a data network.

Other aspects and features of the present invention will become apparent to those ordinarily skilled in the art upon review of the following description of specific embodiments of the invention in conjunction with the accompanying figures.

At least one embodiment of the invention will now be described, by way of example only, with reference to the accompanying drawings, in which:
Figure 1 is a block diagram of an example of a ring-based data transport network;
Figure 2 is a block diagram of a transport node shown in Figure 1, in accordance with an embodiment of the present invention;
Figure 3 is a flowchart illustrating the operation of a program element in the transport node depicted in Figure 2, which implements a bandwidth control mechanism.

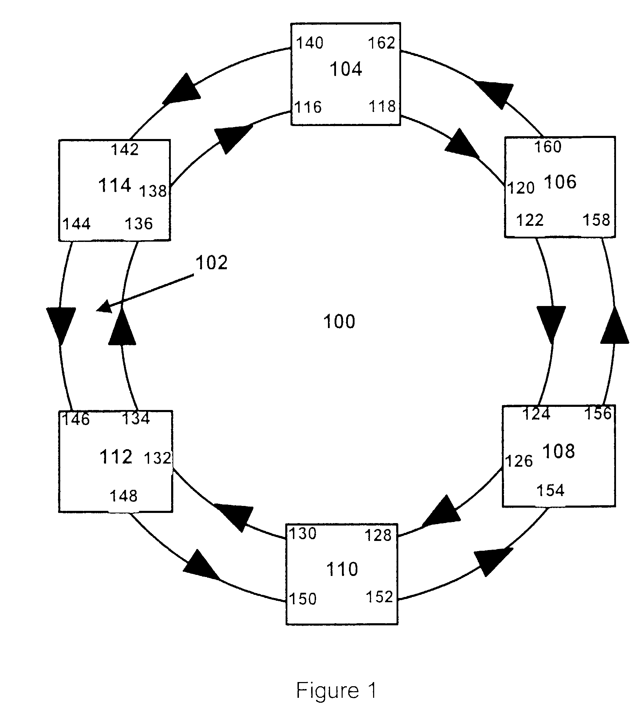

In a specific example the present invention is implemented in a data transport network featuring a ring-based transport medium. Figure 1 illustrates a typical ring-based transport network 100, where the transport ring 102 interconnects a plurality of nodes 104, 106, 108, 110, 112 and 114. Each node includes an input/output pair corresponding to one direction of the ring 102, where the input is for receiving data from the ring 102 and the output is for releasing data to the ring 102. Each connection between an output of one node and an input of another, remote node is defined as a trunk. Note that the endpoints of such a trunk may be referred to as sender (originator of the data being sent over the trunk) and receiver (destination of the data being sent over the trunk). For example, the connection between output 118 of node 104 (sender) and input 132 of node 112 (receiver) is a trunk A, while the connection between output 156 of node 108 (sender) and input 142 of node 114 (receiver) is a trunk B. Note that in these examples, the trunks comprise intermediate nodes between the sender and the receiver through which the data must pass. Since the transport ring 102 is a medium that is common to all of the nodes, the trunks formed between these nodes must share the total bandwidth available over the transport ring 102.

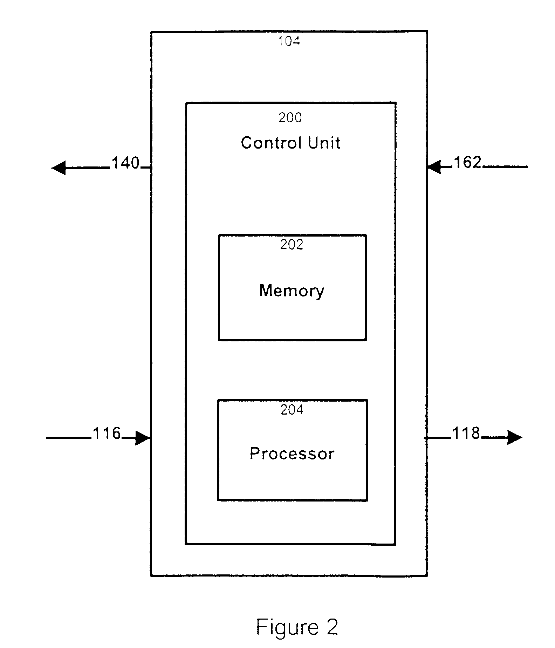

As shown in Figure 2, each of the transport ring 102 nodes generally includes a control unit 200; assume for this example that we are looking at node 104. The control unit 200 includes a memory 202 and a processor 204, and is responsible for controlling the flow of data inserted by the node 104 onto the transport ring 102. Control unit 200 further implements three bandwidth control mechanisms such that fair or unfair sharing of the available bandwidth is selectively controlled, as will be described in further detail below. In this specific example of implementation, the bandwidth sharing control mechanisms are implemented by software executed by the processor 204.

Although the memory 202 is used primarily for control purposes, it also acts as a storage device and includes a plurality of buffers (queues) for receiving and storing data arriving at node 104 from local sources. The traffic from these buffers is to be transported over respective trunks of the transport ring 102. The memory 202 also supports a TCP-like adaptive window for use by the control unit 200, as will be described in further detail below. The memory 202 further contains a program element that regulates the bandwidth sharing control mechanism of the node 104. The program element is comprised of individual instructions that are executed by the processor 204, for selectively controlling the usage of available bandwidth such that a fair or deliberately unfair sharing of the bandwidth is established between certain customers or traffic types. This program element will be described in further detail below.

Note that the control unit 200 further implements a packet discard/marking mechanism for avoiding and controlling congestion. This mechanism involves the use of an output buffer, supported by memory 202, through which local traffic for each trunk as well as all traffic from the ring 102 must pass before being released to the ring 102. When necessary, packets are discarded or marked in a random fashion at an average rate that is governed by the total buffer fill. The random discard will tend to spread loss across all of the trunks using the output buffer. Given that such a mechanism is well known to those skilled in the art and is not critical to the success of the present invention, it will not be described in further detail.

A conventional IP network implements bandwidth sharing among host machines using the Transport Control Protocol (TCP). Although data flow in the network can be bi-directional, it is usual to refer to the originator of a particular piece of data as the sender and the other end as the receiver. In TCP, the sender (sender host machine) constantly tests the network to see if more bandwidth is available and uses the loss of a packet determined by sequence numbers of TCP packets as an indication to decrease its rate of release of packets.

An embodiment of the present invention uses a mechanism to implement bandwidth sharing at a node within a data transport network, where this mechanism has some common points to the TCP process and is thus referred to as a *TCP-like* mechanism. In particular, the mechanism adopts from TCP:
the end-to-end simplicity (any complexity of TCP is contained within the sender and receiver and very little is required from the intermediate nodes);
the self-clocking nature (number of packets in the network is contained in the sense that new packets cannot be injected until old ones leave); and
the additive increase/multiplicative decrease approach (adaptive window) for controlling the data transmission rate.

In a particular example of implementation of the present invention, each sender in the data network 100 implements a primary bandwidth control mechanism that simulates a control overlay concept whereby, as data packets are forwarded by a node (sender) over a particular trunk, the sender generates control packets and inserts these along with the data packets. The insertion of such control packets by a sender into the data network implements a control overlay connection. In effect the control packets are sampling the data network in order to give the sender a view of congestion conditions. The trunk receiver generates acknowledgement messages to report on the reception of these control packets but not on the reception of the data packets. This primary bandwidth control mechanism is such that the sender adjusts its sending rate of the control packets based on the discard or marking of the control packets, specifically on the basis of the acknowledgement messages received from the trunk receiver. In addition, the sending rate of the control packets will directly control the sending rate of data packets over the trunk. As described above, the memory 202 of node 104 supports a TCP-like adaptive window for use by the control unit 200. With respect to this particular example of implementation, the window represents the number of control packets that can be sent by the node 104 before receiving an acknowledgement message from the receiver for the earliest packet in the window. An increase in the size of the window corresponds to an increase in the rate of release of control packets from the node 104, while a decrease in the size of the window corresponds to a decrease in the rate of release of control packets from the node 104.

The data packets carry mostly user payload data, such as speech samples, video samples or other. The control packets carry control information. In a specific example, the control packet is a predefined sequence of bit fields containing, but not limited to: source (sender) and destination (receiver) node identifiers; control sequence numbers; congestion notification; and reverse direction acknowledgements.

Unlike TCP where control information is embedded in the user data packets, the control overlay concept in this example of implementation separates the control information from the user data. For a particular connection, the control packet as defined above emulates the header of a TCP packet and the traffic between control packets (user data packets) represents the payload. Thus, the connection now has a virtual packet with a length controlled by the sampling rate of the control packets.

Each node in the ring-based transport network independently implements a secondary bandwidth control mechanism, which in this example is a combination of two bandwidth control mechanisms, namely a first bandwidth control mechanism and a second bandwidth control mechanism. These mechanisms allow the node to selectively control the usage of available bandwidth over a connection such that fair or deliberately unfair (biased towards a particular customer or type of traffic) sharing of the available bandwidth occurs. Specific to the present invention, the control unit 200 of the node 104 is operative to simultaneously implement the two bandwidth'control mechanisms for a particular connection by taking advantage of the corresponding control overlay connection. In particular, the corresponding control overlay connection provides parameters that may be used by the node 104 to control the rate of data transmission from the node 104 over the particular connection, as will be described in further detail below.

The actual Round Trip Time (RTT) of a connection corresponds to the amount of time that is measured at the sender from the time at which a control packet is released over the connection to the time at which an acknowledgement message is received from the receiver of the control packet. Note that the receiver is a node that is the intended recipient of the user data packets associated with a particular control packet. In that sense the receiver is different from any intermediate nodes since it generates an acknowledgement for the control packet (an outgoing control packet) to signal to the sender that the information has been correctly received. The acknowledgement travels in the reverse direction to the original control packet and so the round trip time is shorter for nodes that are relatively close together. The Maximum Segment Size (MSS) of a normal TCP connection corresponds to the maximum size of the data packets used by the connection. As mentioned above, both the RTT and the MSS influence bandwidth sharing between connections; however, the packet discard mechanism at an intermediate congestion point has no knowledge of these factors, and therefore has no way to ensure fair sharing. In the case where the buffer management scheme, such as Random Early Detection (RED), tend to make all connections have the same number of packets in the window, the rate that a connection achieves is directly proportional to MSS/RTT.

The secondary bandwidth control mechanism defines two parameters: a Virtual Round Trip Time element (VRTT) and a Virtual Maximum Segment Size (VMSS). The VRTT round trip time element includes a first time component corresponding to an actual time of travel of a control packet from the sender node to the remote node and an actual time of travel of an acknowledgement message from the remote node to the sender node, and a second time component corresponding to a delay time element. The delay time element refers to a deliberate delay by the sender in the release of a control packet after the receipt of an acknowledgement message from the receiver, such that a longer propagation time is simulated. The VMSS is the amount of data in data packets associated with a control packet. This refers to either the number of data packets associated with a control packet or the amount of data (such as the number of bytes) in data packets associated with a control packet (i.e. the payload size of the virtual packet).

Assuming that a benchmark value for the ratio of VMSS to VRTT has been established within the data network 100, each sender is aware of how the VMSS and VRTT values for a particular connection compare to this benchmark value. Since the sending rate of the user data packets is dependent on the sending rate of the control packets, it follows that the rate of a particular connection is dependent on the VMSS and VRTT of the corresponding primary bandwidth control mechanism. Thus, by suitably adjusting the VMSS and/or the VRTT of the corresponding control overlay connection, the sender can ensure fair sharing or deliberately unfair sharing of available bandwidth between the particular connection and other connections. Note that each one of the VMSS and VRTT parameters corresponds to a separate bandwidth control mechanism for the node 104.

In order to selectively control bandwidth sharing, a sender may choose to implement one of the following two scenarios with respect to a particular connection: decrease the achieved rate of data transmission over the connection or increase the achieved rate of data transmission over the connection. In the first scenario, the sender may increase the value of VRTT for the connection, thus decreasing the share of bandwidth at a congestion point. In the second scenario, the sender may increase the value of VMSS for the connection, thus increasing the share of bandwidth at a congestion point. Note that alternative variations to the value of either one or both of these parameters may be used by the sender in order to selectively control bandwidth sharing.

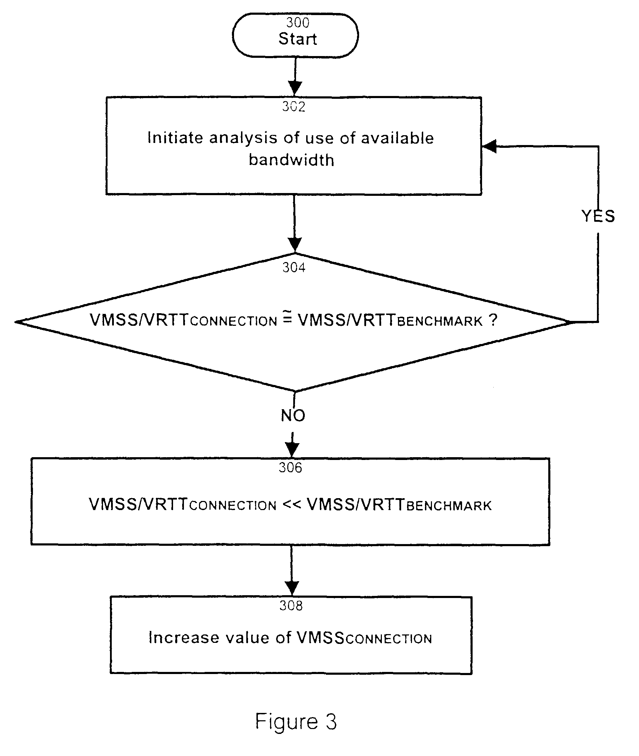

Figure 3 provides a complete flowchart illustrating an example of the operation of the program element stored in the memory 202 of the control unit 200, and executed by the processor 204, that implements the first and the second bandwidth control mechanisms of the transport node (sender) 104. The primary control mechanism has not been illustrated because its operation is very similar to the TCP control process, well known to those skilled in the art. At step 302, the sender 104 initiates an analysis of the use of available bandwidth by its connections. This analysis may include a check for instructions from a network operator with respect to user preferences, whereby bandwidth sharing between connections is to be biased towards a particular customer or traffic type. For a particular connection, a comparison is made of the VRTT and VMSS parameters for the particular connection to the network benchmark value, at step 304. At step 306, the sender 104 determines that the value of the VMSS/VRTT ratio of the connection is much smaller than the benchmark value for the network, which implies that the particular connection will not obtain a fair share of the available bandwidth. At step 308, the sender 104 increases the value of the VMSS for the connection. Accordingly, the amount of data sent over the connection with each control packet is increased, thus increasing the rate of data transmission for the connection and ensuring a fairer sharing of the available bandwidth within the network. As mentioned earlier, increasing the amount of data per control packet can be achieved by increasing the number of data packets per control packet, increasing the size of the data packets or both.

Note that in the scenario above only the secondary bandwidth control mechanism has been used to adjust the bandwidth consumption, while the primary control mechanism has been left untouched.

In another example, at step 306 above the sender 104 determines that the value of the VMSS/VRTT of the connection is much larger than the benchmark value for the network, which implies that the particular connection will use up an unfair share of the available bandwidth. In this case, at step 308 the sender 104 increases the value of the VRTT for the connection. Accordingly the rate of data transmission for the connection will decrease, ensuring a fairer sharing of the available bandwidth within the network. Increasing the VRTT is effected by increasing the delay time component of the VRTT element. This simulates a longer actual time of travel and as a result, causes the primary bandwidth control mechanism to delay the release of the control packets.

As described above, the memory 202 of the node 104 includes for each connection a primary bandwidth control mechanism implementing a TCP-like adaptive window, for use by the processor 204. The window size corresponds to the number of control packets that can be sent over the connection before the earliest control packet in the window is acknowledged by the connection receiver. The window size is variable between a minimum window size and a maximum window size, the minimum window size determining a minimal permissible rate of release of control packets from the node and the maximum window size determining a maximal permissible rate of release of control packets from the node.

As per standard TCP, an additive increase in size of the window results in an increase in the rate of data transmission over the connection. Similarly, a multiplicative decrease in size of the window results in a decrease in the rate of data transmission over the connection. As is well known in the art, too small windows are undesirable, as are too large windows. Small windows are undesirable because, among other reasons, the rate of increase of transmission is very large. For example, increasing a one-packet window to two packets will double the rate and many connections doing this will almost certainly result in excessive packet loss. Large windows are undesirable because it takes much longer to recover after a decrease. Basically, large windows give a looser control loop, wider ranges of buffer-fill and therefore wider ranges of latency.

In a particular example of implementation, a minimum window size is set for the connection. Once the window size has reached this minimum, if it is necessary to further slow down the rate of data transmission for the connection, the value of the VRTT for the connection is increased instead. Doubling the VRTT has the same effect on the transmission rate as does halving the window size. The additive increase in rate is achieved by decreasing the VRTT. Note that VRTT can not be decreased beyond the actual time of travel for a control packet from the sending node to the remote node and the time of travel for the acknowledgement from the remote node to the sending node. When the delay time element has been reduced to zero no further reduction of VRTT is possible. This can be made to directly emulate the transmission rate increase that would be experienced by increasing the window size. When the VRTT once again equals the real RTT, the adaptive window returns to its normal mode of operation, that being additive increase and multiplicative decrease in size in order to respectively increase or decrease the rate of data transmission over the connection.

Expanding the above example of implementation, a maximum window size is also set for the connection. Once the window size has reached this maximum, if it is necessary to further increase the rate of data transmission for the connection, the value of the VMSS for the connection is increased instead. In a real network, the value of VMSS can be set to a high enough value to allow the connection to run at or near full network bandwidth without a large window. Note that when there is a large value for VMSS, the ability to increase the VRTT will still permit the connection to run slowly when necessary. In the limit, the window could have a single fixed size and rely on VRTT as the sole mechanism to change rate of data transmission.

The above description of a preferred embodiment under the present invention should not be read in a limitative manner as refinements and variations are possible without departing from the scope of the invention. The scope of the invention is defined in the appended claims and their equivalents.

## Claims

1. A node for use in a data network, said node comprising:
output means for releasing data towards a remote node;
control means for regulating a rate of release of data from said output, said control means being arranged to:
cause generation and release of control packets from said output, a control packet containing control information associated to at least one data packet released from said output;
implement a first bandwidth control mechanism operative to alter an amount of data in data packets associated with a control packet.

2. A node for use in a data network, said node comprising:
output means for releasing data towards a remote node;
control means for regulating a rate of release of data from said output, said control unit being operative for:
causing generation and release of control packets from said output, a control packet containing control information associated to at least one data packet released from said output;
implementing a first bandwidth control mechanism operative to selectively alter a round trip time element associated with a control packet released from said output, the round trip time element corresponding to the amount of time elapsed from the release of a certain control packet from said output to the receipt at said node of an acknowledgement message from a remote node, the acknowledgement message confirming receipt of the certain control packet at the remote node.

3. A node as claimed in claim 1 or claim 2, wherein said control means is further arranged to:
implement a second bandwidth control mechanism operative to alter a rate of release of control packets from said output.

4. A node as claimed in claim 1 or claim 2, wherein a control packet includes a source identifier designating said node.

5. A node as claimed in claim 4, wherein the control packet includes a destination identifier designating a downstream remote node.

6. A node as claimed in claim 5, wherein the control packet includes control sequence numbers associated to data in data packets associated to the control packet.

7. A node as defined in claim 6, claim 12 or claim 21, wherein said first bandwidth control mechanism is operative to regulate a rate of release of data from said output without altering a rate of release of control packets from said output.

8. A node as claimed in claim 7, wherein said second bandwidth control mechanism is characterized by a window size, the window size being indicative of a number of control packets releasable from said output before receiving an acknowledgement message from the remote node, the acknowledgement message confirming receipt at the remote node of a control packet previously released from said output.

9. A node as claimed in claim 8 or claim 14, wherein said second bandwidth control mechanism is operative to selectively increase the window size to increase the rate of release of data from said output.

10. A node as claimed in claim 9, wherein said second bandwidth control mechanism is operative to selectively decrease the window size to a decrease the rate of release of data from said output.

11. A node as claimed in claim 10, wherein said second bandwidth control mechanism is operative to reduce the window size in response to a failure of reception by said node of an acknowledgement to a control packet from a remote node.

12. A node as claimed in claim 11, wherein the window size is variable between a minimum window size and a maximum window size, the minimum window size determining a minimal permissible rate of release of control packets from said output and the maximum window size determining a maximal permissible rate of release of control packets from said output.

13. A node as claimed in claim 12, wherein said second bandwidth control mechanism operative to selectively alter an amount of data in data packets associated with a control packet is a third bandwidth control mechanism, said first bandwidth control mechanism further implementing a fourth bandwidth control mechanism, said fourth bandwidth control mechanism being operative to selectively alter a round trip time element associated with a control packet released from said output, the round trip time element corresponding to the amount of time elapsed from the release of a certain control packet from said output to the receipt at said node of an acknowledgement message from the remote node, the acknowledgement message confirming receipt of the certain control packet at the remote node.

14. A node as claimed in claim 13 or claim 20, wherein said fourth bandwidth control mechanism is operative to regulate a rate of release of data from said output without altering the window size.

15. A node as claimed in claim 2, claim 6 or claim 14, wherein said round trip time element includes a first time component corresponding to an actual time of travel of a control packet from said output to the remote node and an actual time of travel of an acknowledgement message from the remote node to said node, and a second time component corresponding to a delay time element.

16. A node as claimed in claim 15, wherein said fourth bandwidth control mechanism is operative to alter the delay time element to alter the round trip time element.

17. A node as claimed in claim 16, wherein said fourth bandwidth control mechanism is operative to increase the round trip time element associated with a certain control packet released from said output by delaying the release of the certain control packet from said output by a time period corresponding to said second time component upon receipt of an acknowledgement message from a remote node, the acknowledgement message confirming receipt of an earlier control packet released from said output.

18. A node as claimed in claim 5 or claim 17, wherein when the window size is at the minimum window size, said control unit is operative to pass control to either one of said third and fourth bandwidth control mechanisms, in order to further decrease the rate of release of data from said output.

19. A node as claimed in claim 18, wherein when the window size is at the maximum window size, said control unit is operative to pass control to either one of said third and fourth bandwidth control mechanisms, in order to further increase the rate of release of data from said output.

20. A node as claimed in claim 17, wherein said second bandwidth control mechanism is characterized by a window size, the window size being indicative of a number of control packets that can be released from said output before receiving an acknowledgement message from the remote node, the acknowledgement message confirming receipt at the remote node of the earliest control packet in the adaptive window.

21. A node as claimed in claim 12, wherein said second bandwidth control mechanism operative to selectively alter a round trip time element associated with a control packet released from said output is a third bandwidth control mechanism, said first bandwidth control mechanism further implementing a fourth bandwidth control mechanism, said second bandwidth control mechanism being operative to selectively alter an amount of data in data packets associated with a control packet.

22. A method for controlling the rate of release of data from a node in a data network, said node comprising:
output means for releasing data to a remote node;
said method comprising:
generating and releasing control packets from said output, a control packet containing control information associated to at least one data packet released from said output;
selectively altering an amount of data in data packets associated with a control packet to dynamically control the rate of release of data from a node.

23. A method as claimed in claim 22, wherein said method further comprises selectively altering a round trip time element associated with a control packet released from said output, the round trip time element corresponding to the amount of time elapsed from the release of a certain control packet from the node to the receipt at the node of an acknowledgement message from a remote node, the acknowledgement message confirming receipt of the certain control packet at the remote node.

24. A computer program element comprising:
computer program code means to make a computer execute the method as claimed in claim 22, or claim 23 when dependent upon claim 22.

25. A virtual data packet comprising a control packet associated with at least one data packet, and the at least one data packet.
